# EUROPÄISCHE PATENTSCHRIFT

(11) **EP 3 408 931 B1**
(45) Veröffentlichungstag und Bekanntmachung des Hinweises auf die Patenterteilung: **11.03.2020**
(21) Anmeldenummer: 17702044.3
(22) Anmeldetag: 25.01.2017
(51) Int. Cl.: H02M 3/156, F23N 1/02, F23N 1/00, F24H 9/20

(54) **SPANNUNGSWANDLER, AKTUATOR UND GASBRENNER**
VOLTAGE CONVERTER, ACTUATOR AND GAS BURNER
TRANSFORMATEUR DE TENSION, ACTIONNEUR ET BRÛLEUR DE GAZ

(30) Priorität: 25.01.2016 PT 2016109102
(43) Veröffentlichungstag der Anmeldung: 05.12.2018
(73) Patentinhaber: Bosch Termotecnologia S.A., 3800-533 Cacia Aveiro (PT)
(72) Erfinder: OLIVEIRA, Jose, 3850-577 Branca (PT); FERREIRA, Luis Terra, 3860-087 Avanca (PT)
(74) Vertreter: Bee, Joachim
(86) Internationale Anmeldenummer: PCT/EP2017/051455
(87) Internationale Veröffentlichungsnummer: WO 2017/129575

(56) Entgegenhaltungen:
- EP-A2- 1 835 603
- JP-A- S63 174 558
- Muhammad H. Rashid: "13.3 Step-down (Buck) Converter" In: "Power Electronics Handbook", 13. Januar 2013 (2013-01-13), Elsevier Science, USA, XP055357500, ISBN: 978-0-12-382037-2 Seiten 251-252, Abbildung 13.4

## Beschreibung

Die Erfindung betrifft eine Technik zur Bereitstellung eines Stroms zur Steuerung eines Aktuators. Insbesondere betrifft die Erfindung die Steuerung eines Aktuators, der dazu eingerichtet ist, ein Gasventil zu betätigen.

Ein Gasbrenner zum Erhitzen von Wasser umfasst einen Ventilator zur Erzeugung eines Volumenstroms von Luft und ein Gasventil. Das Gasventil umfasst eine Schwingspule und ist proportional zwischen einem geschlossenen und einem offenen Zustand steuerbar, um einen Fluss von brennbarem Gas durch das Ventil zu steuern. Der Fluss von Gas durch das Gasventil ist üblicherweise eine Funktion eines durch die Schwingspule fließenden Stroms.

Eine Stromsteuerung für die Schwingspule kann einen Linearregler umfassen, der das Gasventil zwar in einem großen Bereich verstellen kann, dabei aber einen relativ geringen Wirkungsgrad aufweist und üblicherweise so viel elektrische Abwärme erzeugt, dass ein Kühlkörper zu deren Abführung erforderlich ist. In einer zweiten Ausführungsform ist ein getakteter Stromregler, insbesondere ein getakteter Abwärtsregler (Tiefsetzsteller, step-down converter, buck converter) zur Steuerung des Stroms durch die Schwingspule eingesetzt. Der Abwärtswandler umfasst ein Stromventil, das mittels einer Ansteuereinrichtung periodisch geöffnet und geschlossen werden kann, wobei ein Tastverhältnis eines Ansteuersignals die an einem Schaltungsausgang des Abwärtswandlers anliegende Spannung und dadurch mittelbar auch den durch die Schwingspule fließenden Strom steuert. Da das Stromventil nicht unbegrenzt schnell öffnen und schließen kann, kann der Abwärtswandler bei sehr kleinen Tastverhältnissen nahe 0 % nicht mehr eingesetzt werden. Ein sehr geringer Gasfluss kann daher nicht mehr genau gesteuert werden.

Es ist Aufgabe der vorliegenden Erfindung, eine verbesserte Technik für einen elektrischen Abwärtswandler bereitzustellen, der wenigstens eines der genannten Probleme löst. Dazu sind die Gegenstände der unabhängigen Ansprüche bereitgestellt. Unteransprüche geben bevorzugte Ausführungsformen wieder.

### Offenbarung der Erfindung

Ein elektrischer Abwärtswandler umfasst einen Schaltungseingang und einen Schaltungsausgang, die ein gemeinsames Bezugspotential haben, ferner ein Stromventil mit einem Eingang und einem Ausgang, wobei der Eingang mit dem Schaltungseingang verbunden ist; eine Spule, die zwischen den Ausgang des Stromventils und den Schaltungsausgang geschaltet ist; eine Diode, die in Durchlassrichtung vom Bezugspotential zum Ausgang des Stromventils eingesetzt ist; einen Ausgangskondensator zwischen dem Schaltungsausgang und dem Bezugspotential; und eine Steuereinrichtung zum periodischen Öffnen und Schließen des Stromventils. Zwischen der Anode der Diode und dem Bezugspotential ist eine Zenerdiode mit Durchlassrichtung zum Bezugspotential eingefügt und parallel zur Diode ist ein Widerstand vorgesehen.

Der Abwärtswandler kann Vorteile eines Linearwandlers und eines bekannten Abwärtswandlers in sich vereinen. Insbesondere kann der beschriebene Abwärtswandler einen großen Dynamikbereich abdecken, indem er an seinem Ausgang an einem ohmschen Widerstand Ströme zwischen wenigen Milliampere und mehreren hundert Milliampere genau einstellen kann. Gleichzeitig kann ein Wirkungsgrad des Abwärtswandlers groß sein. In der Praxis kann ein Wirkungsgrad von deutlich über 50 %, teilweise bis zu ca. 95 %, erzielt werden.

In einer besonders bevorzugten Ausführungsform ist zwischen dem Schaltungseingang und dem Bezugspotential ein Eingangskondensator vorgesehen. Die Eingangsspannung am Schaltungseingang kann dadurch verbessert stabilisiert werden, sodass sowohl beim Öffnen als auch beim Schließen des Stromventils die Eingangsspannung im Wesentlichen stabil bleiben kann. Der Abwärtswandler kann dadurch genauer arbeiten. Außerdem kann eine Spannungsquelle zur Versorgung des Schaltungseingangs weniger stark belastet werden. Andere Verbraucher, die ebenfalls mit dem Schaltungseingang verbunden sind, können vermindert gestört werden.

Ein stromgesteuerter Aktuator umfasst eine Schwingspule und den oben beschriebenen Abwärtswandler, wobei die Schwingspule elektrisch mit dem Schaltungsausgang verbunden ist, sodass eine mittels des Aktuators angesteuerte Stellposition von einem mittels des Abwärtswandlers bewirkten Stromfluss durch die Schwingspule abhängig ist. Dadurch kann der Aktuator präzise und verlustarm gesteuert werden.

Eine Steuereinrichtung des Abwärtswandlers kann das Stromventil mittels eines pulsmodulierten Signals (Pulse Width Modulation: PWM) mit einem Tastverhältnis D ansteuern, sodass die Stellposition der Schwingspule über das Tastverhältnis D steuerbar ist. Die Erzeugung des PWM-Signals kann mittels eines PWM-Generators erfolgen, sodass die Steuereinrichtung lediglich das Tastverhältnis D vorgeben muss und somit nur wenig mit der Erzeugung des Steuersignals belastet wird.

Der stromgesteuerte Aktuator kann insbesondere zur Steuerung eines Ventils, etwa eines Gasventils, eingesetzt werden. Dabei wirkt der Aktuator vorzugsweise derart auf das Gasventil, dass ein Öffnungsgrad des Gasventils von dem mittels des Abwärtswandlers bewirkten Stromfluss abhängig ist. Das Gasventil kann mittels des Aktuators von einer minimal bis zu einer maximal geöffneten Stellung feinfühlig gesteuert werden.

Bevorzugterweise steuert die Steuereinrichtung des Abwärtswandlers das Stromventil mittels eines pulsmodulierten Signals mit einem Tastverhältnis an, sodass eine Stellposition der Schwingspule über das Tastverhältnis steuerbar ist.

Das Tastverhältnis kann insbesondere leicht von einem integrierten Mikrocomputer oder einer anderen integrierten Steuereinrichtung generiert werden. Dadurch kann die Ansteuerung des Aktuators auch in einem komplexeren Gerät, in dem bereits andere Vorgänge mittels der Steuereinrichtung gesteuert werden, verbessert integriert werden.

Ein Gasbrenner umfasst ein steuerbares Gasventil mit einer Schwingspule und den oben beschriebenen Aktuator zur Steuerung des Gasventils. Durch die verbesserte Steuerung eines Stroms von Gas durch das Gasventil kann eine verbesserte Verbrennung gesteuert werden, sodass eine Effizienz des Gasbrenners erhöht ist. Eine Umweltbelastung durch Schadstoffe kann gleichzeitig verringert sein.

Bevorzugterweise umfasst der Gasbrenner ferner einen Ventilator zur Erzeugung eines Volumenstroms von Luft im Bereich eines Gasaustritts des Gasventils, wobei der Ventilator mittels der gleichen Steuereinrichtung steuerbar ist. Insbesondere können eine Drehzahl des Ventilators und ein Durchfluss von Gas durch das Gasventil mittels der Steuereinrichtung verbessert aufeinander abgestimmt werden. Die Abstimmung kann in Abhängigkeit eines Parameters erfolgen, der durch die Verbrennung von Gas mit Luftsauerstoff beeinflusst wird, beispielsweise eine Flammentemperatur.

### Kurze Beschreibung der Figuren

Die Erfindung wird nun mit Bezug auf die beigefügten Figuren genauer beschrieben, in denen:
- Fig. 1: eine schematische Darstellung eines ventilierten Gasbrenners; und
- Fig. 2: einen Schaltplan eine elektrischen Abwärtswandlers
darstellt.

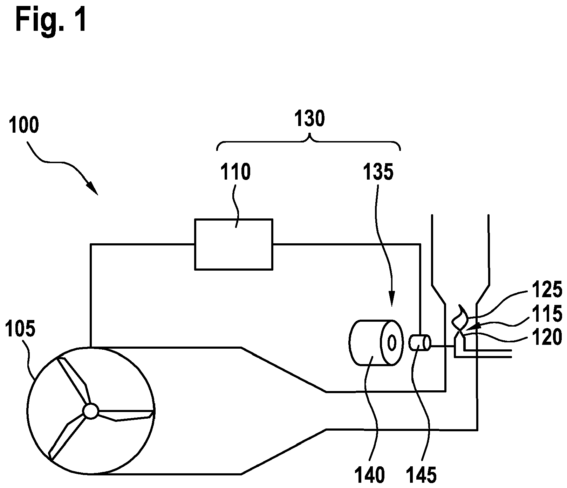

Figur 1 zeigt eine schematische Darstellung eines Gasbrenners 100. Der Gasbrenner 100 umfasst bevorzugterweise einen Ventilator 105 zur Bereitstellung eines Volumenstroms von Luft und eine Steuereinrichtung 110 zur Steuerung des Ventilators 105. Insbesondere ist die Steuereinrichtung 110 dazu eingerichtet, eine Drehzahl des Ventilators 105 zu steuern. Der durch den Ventilator 105 bereitgestellte Volumenstrom passiert einen Gasaustritt 115 eines Gasventils 120, sodass aus dem Gasaustritt 115 austretendes Gas mit dem Volumenstrom von Luft vermischt und zu einer Flamme 125 entzündet werden kann. Die Flamme 125 kann insbesondere zur Erwärmung einer Flüssigkeit, insbesondere Wasser, beispielsweise mittels eines Wärmetauschers, dienen. Der Gasbrenner 100 kann insbesondere in einer Warmwasser-Anlage, beispielsweise einer Therme, eingesetzt werden. Die Therme kann zur Bereitstellung von warmem Wasser in einer Wohnung oder einem Haus eingerichtet sein.

Das Gasventil 120 ist mit einem Aktuator 130 verbunden, um das Gasventil 120 zu öffnen oder zu schließen. Der Aktuator 130 umfasst eine Schwingspule 135, auch Tauchspule genannt, und eine Steuereinrichtung, die in der dargestellten Ausführungsform mit der Steuereinrichtung 110 integriert ist. Die Schwingspule 135 umfasst einen Permanentmagneten 140 mit einer Aussparung und einen Schwingspulenträger 145, der dazu eingerichtet ist, in die Aussparung einzutauchen. Am Schwingspulenträger 145 ist eine elektrische Spule angebracht, die, wenn sie von Strom durchflossen wird, ein Magnetfeld erzeugt, das den Schwingspulenträger 145 im Magnetfeld des Permanentmagneten 140 in die Aussparung hinein oder aus ihr heraus zieht. Dieses Prinzip ist beispielsweise aus dem technischen Gebiet der Lautsprecher bekannt. Ein elastisches Element, beispielsweise eine Membran, stellt eine geeignete Rückstellkraft auf den Schwingspulenträger 145 bereit, sodass der Schwingspulenträger 145 wieder in eine Normalposition zurückgestellt wird, wenn kein Strom mehr durch die Spule fließt. Der Schwingspulenträger 145 ist bevorzugterweise derart mit dem Gasventil 120 verbunden, dass die Stellung des Schwingspulenträgers 145 in der Aussparung zu einem Öffnungsgrad des Gasventils 120 proportional ist.

Um die Verbrennung der Flamme 125 zu steuern, muss die Steuereinrichtung 110 üblicherweise dazu eingerichtet sein, sowohl den Ventilator 105 als auch den Aktuator 130 mit der Schwingspule 135 anzusteuern. Eine Änderung der Position des Aktuators 130 erfolgt üblicherweise relativ langsam.

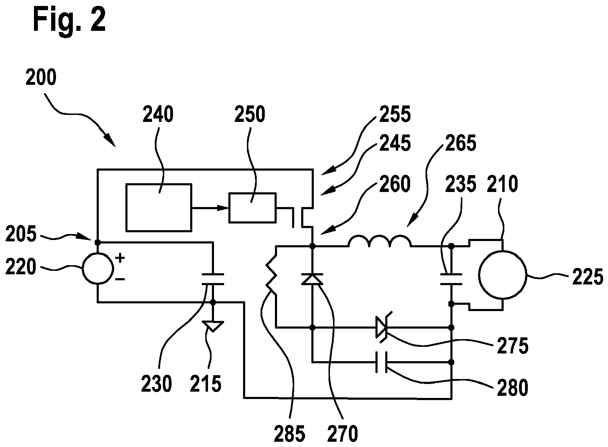

Figur 2 zeigt einen Schaltplan eines elektrischen Abwärtswandlers 200. Der Abwärtswandler 200 umfasst einen Schaltungseingang 205 und einen Schaltungsausgang 210, die auf ein gemeinsames Bezugspotential 215 bezogen sind. Zwischen dem Schaltungseingang 205 und dem Bezugspotential 215 ist eine Spannungsquelle 220 vorgesehen. Zwischen dem Schaltungsausgang 210 und dem Bezugspotential 215 ist ein Verbraucher 225 vorgesehen, der insbesondere den Aktuator 130 und weiter bevorzugt die Schwingspule 135 umfassen kann. Bevorzugterweise ist parallel zur Spannungsquelle 220 ein Eingangskondensator 230 geschaltet. Ebenso bevorzugt ist, dass parallel zum Verbraucher 225 ein Ausgangskondensator 235 geschaltet ist.

Eine Steuereinrichtung 240, die mit der Steuereinrichtung 110 von Figur 1 integriert ausgeführt sein kann, steuert ein Stromventil 245 an, wozu ein zwischengeschalteter Treiber 250 vorgesehen sein kann. Das Stromventil 245 umfasst üblicherweise einen Halbleiter, insbesondere einen Transistor, beispielsweise des FET- oder IGBT-Typs. Ein Eingang 255 des Stromventils 245 ist mit dem Schaltungseingang 205 verbunden. Ein Ausgang 260 des Stromventils 245 ist mit einer Spule 265 verbunden, deren zweites Ende mit dem Schaltungsausgang 210 verbunden ist. An den Ausgang 260 des Stromventils 245 führt außerdem eine Diode 270, deren Anode in einer bekannten Schaltung unmittelbar mit dem Bezugspotential 215 verbunden ist.

In der hier vorliegenden Ausführungsform ist die Anode der Diode 270 über eine Zenerdiode 275 an das Bezugspotential 215 geführt, wobei die Kathode der Zenerdiode 275 zum Bezugspotential 215 weist. Bevorzugterweise ist parallel zur Zenerdiode 275 ein Kondensator 280 geschaltet. Parallel zur Diode 270 ist ein Widerstand 285 vorgesehen.

Die Steuereinrichtung 240 ist dazu eingerichtet, das Stromventil 245 periodisch zu öffnen und zu schließen, wozu ein pulsweitenmoduliertes (PWM) Signal mit einem vorbestimmten Tastverhältnis verwendet werden kann. Das Tastverhältnis kann üblicherweise in einem Bereich zwischen 0 % und 100 % verändert werden. Eine Periodendauer des PWM-Signals ist dabei deutlich kürzer als die Periode einer Verstellung des Tastverhältnisses.

Die Spannung am Verbraucher 225 bestimmt sich an einem üblichen Abwärtswandler 200 als Produkt aus einem Wirkungsgrad, einer Spannung der Spannungsquelle 220 und dem Tastverhältnis D. Der Verbraucher 225 hat einen vorbestimmten resistiven (ohmschen) Widerstand, sodass durch den Verbraucher 225 ein Strom fließt, der als Quotient der Spannung am Schaltungsausgang 210 des Abwärtswandlers 200 und dem Widerstand 285 bestimmt ist. Dabei ist zu beachten, dass der Wirkungsgrad üblicherweise bei einem konstanten Widerstand des Verbrauchers 225 eine Funktion der Spannung am Schaltungseingang 205 und des Tastverhältnisses D ist.

In der oben dargestellten Schaltung ist die Ausgangsspannung um einen Betrag K vermindert, der durch die Zenerspannung der Zenerdiode 275 bestimmt ist.

Der Kondensator 280 über der Zenerdiode 275 dient der Bedämpfung, um ein stabiles Verhalten der Regelung und damit der Spannung am Verbraucher 225 zu verbessern. Der Widerstand 285 polarisiert die Diode 270.

Der gezeigte Abwärtswandler 200 kann durch passende Wahl eines Tastverhältnisses D des PWM-Signals der Steuereinrichtung 240 eine feinfühlige und wiederholbare Steuerung der Spannung am Verbraucher 225 bzw. des durch ihn fließenden Stroms gewährleisten. Dabei kann die Steuereinrichtung 240 vorteilhafterweise auch zur Steuerung eines anderen Parameters eingesetzt werden, wie im Beispiel von Figur 1 des Ventilators 105.

## Patentansprüche

1. Elektrischer Abwärtswandler (200) mit einem Schaltungseingang (205) und einem Schaltungsausgang (210), die ein gemeinsames Bezugspotential (215) haben, wobei der Abwärtswandler (200) folgendes umfasst:
- ein Stromventil (245) mit einem Eingang (255) und einem Ausgang (260),
- wobei der Eingang (255) mit dem Schaltungseingang (205) verbunden ist;
- eine Spule (265), die zwischen den Ausgang (260) des Stromventils (245) und den Schaltungsausgang (210) geschaltet ist;
- eine Diode (270), die in Durchlassrichtung vom Bezugspotential (215) zum Ausgang (260) des Stromventils (245) eingesetzt ist;
- einen Ausgangskondensator (235) zwischen dem Schaltungsausgang (210) und dem Bezugspotential (215); und
- eine Steuereinrichtung (240) zum periodischen Öffnen und Schließen des Stromventils (245);
**dadurch gekennzeichnet, dass**
- zwischen der Anode der Diode (270) und dem Bezugspotential (215) eine Zenerdiode (275) mit Durchlassrichtung zum Bezugspotential (215) eingefügt ist;
- parallel zur Diode (270) ein Widerstand (285) vorgesehen ist.

2. Abwärtswandler (200) nach Anspruch 1, wobei zwischen dem Schaltungseingang (205) und dem Bezugspotential (215) ein Eingangskondensator (230) vorgesehen ist.

3. Stromgesteuerter Aktuator (130), umfassend eine Schwingspule (135) und einen Abwärtswandler (200) nach einem der vorangehenden Ansprüche, wobei die Schwingspule (135) elektrisch mit dem Schaltungsausgang (210) verbunden ist, sodass eine mittels des Aktuators (130) angesteuerte Stellposition von einem mittels des Abwärtswandlers (200) bewirkten Stromfluss durch die Schwingspule (135) abhängig ist.

4. Aktuator (130) nach Anspruch 3, wobei die Steuereinrichtung (240) des Abwärtswandlers (200) das Stromventil (245) mittels eines pulsmodulierten Signals mit einem Tastverhältnis (D) ansteuert, sodass die Stellposition der Schwingspule (135) über das Tastverhältnis (D) steuerbar ist.

5. Gasbrenner (100), umfassend ein steuerbares Gasventil (120) sowie einen Aktuator (130) nach Anspruch 3 oder 4 zur Steuerung des Gasventils (120), wobei der Aktuator (130) derart auf das Gasventil (120) wirkt, dass ein Öffnungsgrad des Gasventils (120) von dem mittels des Abwärtswandlers (200) bewirkten Stromfluss abhängig ist.

6. Gasbrenner (100) nach Anspruch 5, ferner umfassend einen Ventilator (105) zur Erzeugung eines Volumenstroms von Luft im Bereich eines Gasaustritts (115) des Gasventils (120), wobei der Ventilator (105) mittels der gleichen Steuereinrichtung (110, 240) steuerbar ist.

## Claims

1. Electrical step-down converter (200) having a circuit input (205) and a circuit output (210), which have a common reference potential (215), wherein the step-down converter (200) comprises the following:
- a current valve (245) having an input (255) and an output (260),
- wherein the input (255) is connected to the circuit input (205);
- a coil (265), which is connected between the output (260) of the current valve (245) and the circuit output (210) ;
- a diode (270), which is used in the forward direction from the reference potential (215) to the output (260) of the current valve (245);
- an output capacitor (235) between the circuit output (210) and the reference potential (215); and
- a control device (240) for periodically opening and closing the current valve (245);
**characterized in that**
- a Zener diode (275) with forward direction to the reference potential (215) is inserted between the anode of the diode (270) and the reference potential (215);
- a resistor (285) is provided in parallel with the diode (270) .

2. Step-down converter (200) according to Claim 1, wherein an input capacitor (230) is provided between the circuit input (205) and the reference potential (215).

3. Current-controlled actuator (130), comprising an oscillating coil (135) and a step-down converter (200) according to either of the preceding claims, wherein the oscillating coil (135) is electrically connected to the circuit output (210) so that an actuating position actuated by means of the actuator (130) is dependent on a flow of current through the oscillating coil (135) caused by means of the step-down converter (200).

4. Actuator (130) according to Claim 3, wherein the control device (240) of the step-down converter (200) actuates the current valve (245) by means of a pulse-modulated signal at a duty cycle (D) such that the actuating position of the oscillating coil (135) can be controlled by means of the duty cycle (D).

5. Gas burner (100), comprising a controllable gas valve (120) and an actuator (130) according to Claim 3 or 4 for controlling the gas valve (120), wherein the actuator (130) acts on the gas valve (120) in such a way that a degree of opening of the gas valve (120) is dependent on the flow of current caused by means of the step-down converter (200).

6. Gas burner (100) according to Claim 5, further comprising a fan (105) for generating a volume flow of air in the region of a gas outlet (115) of the gas valve (120), wherein the fan (105) can be controlled by means of the same control device (110, 240).

## Revendications

1. Convertisseur abaisseur (200) électrique, comprenant une entrée de circuit (205) et une sortie de circuit (210), qui ont un potentiel de référence (215) commun, le convertisseur abaisseur (200) comprenant les éléments suivants :
- un régulateur de courant (245) pourvu d'une entrée (255) et d'une sortie (260),
- l'entrée (255) étant reliée à l'entrée de circuit (205) ;
- une bobine (265), qui est branchée entre la sortie (260) du régulateur de courant (245) et la sortie de circuit (210) ;
- une diode (270), qui est insérée dans le sens passant du potentiel de référence (215) vers la sortie (260) du régulateur de courant (245) ;
- un condensateur de sortie (235) entre la sortie de circuit (210) et le potentiel de référence (215) ; et
- un dispositif de commande (240) destiné à ouvrir et à fermer périodiquement le régulateur de courant (245) ; **caractérisé en ce que**
- une diode zener (275) avec le sens passant vers le potentiel de référence (215) est insérée entre l'anode de la diode (270) et le potentiel de référence (215) ;
- une résistance (285) est présente en parallèle avec la diode (270).

2. Convertisseur abaisseur (200) selon la revendication 1, un condensateur d'entrée (230) se trouvant entre l'entrée de circuit (205) et le potentiel de référence (215).

3. Actionneur (130) commandé en courant, comprenant une bobine d'oscillation (135) et un convertisseur abaisseur (200) selon l'une des revendications précédentes, la bobine d'oscillation (135) étant reliée électriquement à la sortie de circuit (210) de sorte qu'une position de réglage commandée au moyen de l'actionneur (130) est dépendante d'un flux de courant à travers la bobine d'oscillation (135) produit au moyen du convertisseur abaisseur (200).

4. Actionneur (130) selon la revendication 3, le dispositif de commande (240) du convertisseur abaisseur (200) pilotant le régulateur de courant (245) au moyen d'un signal modulé en largeur d'impulsions ayant un rapport cyclique (D), de sorte que la position de réglage de la bobine d'oscillation (135) peut être commandée par le biais du rapport cyclique (D).

5. Brûleur à gaz (100), comprenant une vanne à gaz (120) commandable ainsi qu'un actionneur (130) selon la revendication 3 ou 4 destiné à commander la vanne à gaz (120), l'actionneur (130) agissant sur la vanne à gaz (120) de telle sorte qu'un degré d'ouverture de la vanne à gaz (120) est dépendant du flux de courant produit au moyen du convertisseur abaisseur (200).

6. Brûleur à gaz (100) selon la revendication 5, comprenant en outre un ventilateur (105) destiné à générer un débit volumique d'air dans la zone d'une sortie de gaz (115) de la vanne à gaz (120), le ventilateur (105) pouvant être commandé au moyen du même dispositif de commande (110, 240).
